Europäisches Patentamt

European Patent Office

Office européen des brevets

(11) Publication number: **0 379 630**
**A1**

## EUROPEAN PATENT APPLICATION

(21) Application number: **89107355.3**

(22) Date of filing: **24.04.89**

(51) Int. Cl.⁵: **B60N 3/04**

(30) Priority: **23.01.89 IT 1915189**

(43) Date of publication of application:
**01.08.90 Bulletin 90/31**

(84) Designated Contracting States:
**AT BE CH DE ES FR GB GR LI LU NL SE**

(71) Applicant: **Sagona, Margherita**
**Via Ugo La Malfa 10126**
**I-90147 Palermo(IT)**

(72) Inventor: **Sagona, Margherita**
**Via Ugo La Malfa 10126**
**I-90147 Palermo(IT)**

(74) Representative: **Filippi, Remo**
**Via Aldrovandi, 5**
**I-20129 Milano(IT)**

(54) **Floor mat for motor vehicles that includes means for draining off and absorbing water.**

(57) Floor mat(10) for the inside of motor vehicles(29) in which, at the point where the feet(35) rest on the floor, there is a "package" formed of one or more overlain layers (16)of absorbent material, and of a grating(17)on top of them whose purpose is to absorb any water brought in from outside on the driver's shoes(36), supplying said shoes with a dry structure on which to rest, and further permitting absorption of deodorants.

fig. 5

EP 0 379 630 A1

## Field of the art

The invention concerns a floor mat for passenger compartments in motor vehicles.

## Prior art

The ordinary type of mat put on the floor of motor vehicles under the feet are well-known accessories.

They provide a useful foot rest especially for the driver, whose feet are constantly moving to press the pedals, and also protect areas on the floor covering particularly exposed to hard wear.

Said accessories cannot however prevent occurrence of discomfort caused by water brought into the vehicle from outside (for example water formed by melting of snow caught in the rubber treads on the soles of winter boots). In particular the leg above the foot pressing the pedals is necessarily in an inclined position and this causes hems of trousers or of long skirts to rest on the mat and absorb the water stagnating there.

The invention here described avoids these drawbacks at the same time offering advantages as will be explained below.

## Description of the invention

Subject of the invention is a mat for motor vehicles that comprises a removeable grating, in the area of said mat under the feet, which provides a dry surface for shoes even when water has been brought inside the vehicle on said shoes. The water drips down through the grating into one or more layers of absorbent material placed between said grating and the underside of the mat.

In association with this system, or as an alternative to it, drainage channels are provided to convey the water into a tray-like receptacle comprised in the structure of the mat. The absorbent layer, or layers, consist of spongy material of various kinds.

The grating is made of rigid or semi-rigid plastic and is formed of crossed strips, or else of a sheet through which holes are bored in different ways.

Preferably the "package",consiting of the grating plus the absorbent layer or layers, is placed in the mat's tray-like depression and is fixed to the base of the tray part by holding means at the front or at the sides, or by removeable means such as screws and the like, or else by a lateral or otherwise situated hinge and the like, it being possible in this way to lift out the grating and absorbent layers for periodical cleaning or for renewal of said layers when necessary.

The above frontally mounted means consist of knobs and the like fixed to the mat so that,when light pressure is applied, they penetrate through holes in said grating made for them.

In a preferred type of execution there is a wide hole in the grating in an area behind that occupied by the feet, or even at one side, said hole serving for easy introduction into the absorbent layers of a deodorant in liquid, powder or paste form.

Alternatively the mat may comprise a container communicating with the absorbent layers for gradual transfer of the deodorant into said layers.

The tray-like base into which the "package" is placed is preferably created by a depression downward from the upper surface of the mat for a depth sufficient to take the thickness of said "package".

To even up the protrusion on the underside of the mat, created by the depth of the tray shaped to receive the "package", ribs or similar types of protruding structures are made on the outward facing zones of said underside.

This ensures that total thickness of the mat described is more or less the same over its whole area.

On the upper surface ribbing on the sides of the mat extending outwards from the tray lie practically perpendicular to the edges of said tray, the effect being to create drainage channels, especially where said sides slope down to the tray, conveying water into the absorbent layers.

## Advantages

Water carried inside the motorvehicle on boots is promptly drained away and absorbed leaving the top surface of the grating practically dry and preventing clothes, especially trouser hems, from getting wet.

Water dripping onto the ribbed sides of the mat also runs down the drainage channels so formed and reaches the absorbent layers or the tray-shaped receptacle below them.

As the mat and grating can be easily taken apart, periodical cleaning and renewal when necessary of the absorbent layers is facilitated.

If deodorant is put into the absorbent layers the inside of the motor vehicle will be agreeably perfumed.

Characteristics and purposes of the invention will be made even clearer by the following example of its execution illustrated by diagrammatic drawings.

## Example of execution

Fig. 1: Perspective view of the inside of a motor vehicle showing the mats subject of the invention.

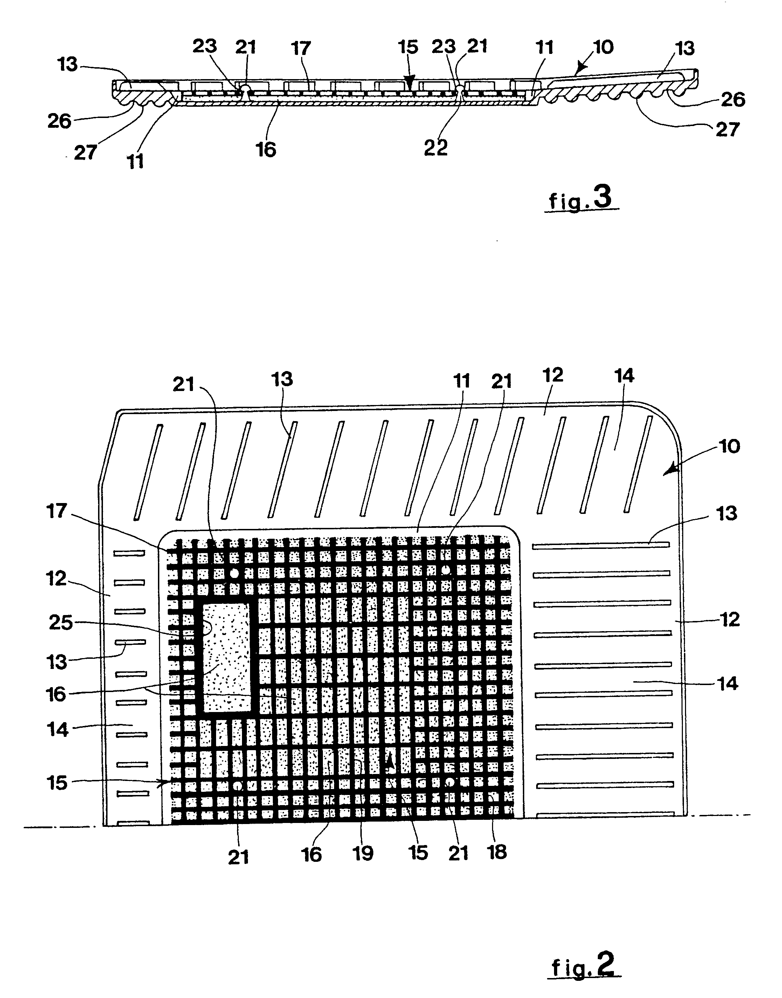

Fig. 2: Detailed view of the mat seen from above.

Fig. 3: A longitudinal cross section of the mat.

Fig. 4: Detail of a motor vehicle showing the driver's foot on a pedal and one of the mats on the market.

Fig. 5: The same, but with the mat subject of the invention.

The mat 10 comprises a tray-like depression 11 in a more or less central position, and outer zones 12.

Said tray is shallow and is situated under the area where the feet usually rest.

The outer zones 12 have ribs 13 substantially perpendicular to the edges of the tray thus creating drainage channels 14 down which the water runs into the tray 11.

Placed in said tray is the "package" 15 comprising the absorbent layer 16 and grating 17 of semi-rigid plastic.

The absorbent layer 16 preferably consists of spongy material.

The grating 17 comprises square holes 18 and, in one internal area, rectangular holes 19.

The "package" 15 is made stable by knobs 21 on shanks 22 which knobs, when lightly pressed, pass through holes 23 in the grating.

Posterior to the central area of the mat there is an aperture 25 through which a deodorant can be introduced into the absorbent layer 16.

Thickness of the "package" 15 is practically the same as the depth of the tray-like receptacle 11.

Thickness of the entire underside of the mat is practically constant this being ensured by the presence of ribbing 27 on the lower surface of said mat on the areas 26 around the tray 11, said ribbing projecting down from said lower surface as far as the depression forming the tray 11 so that overall thickness of the mat is practically the same throughout.

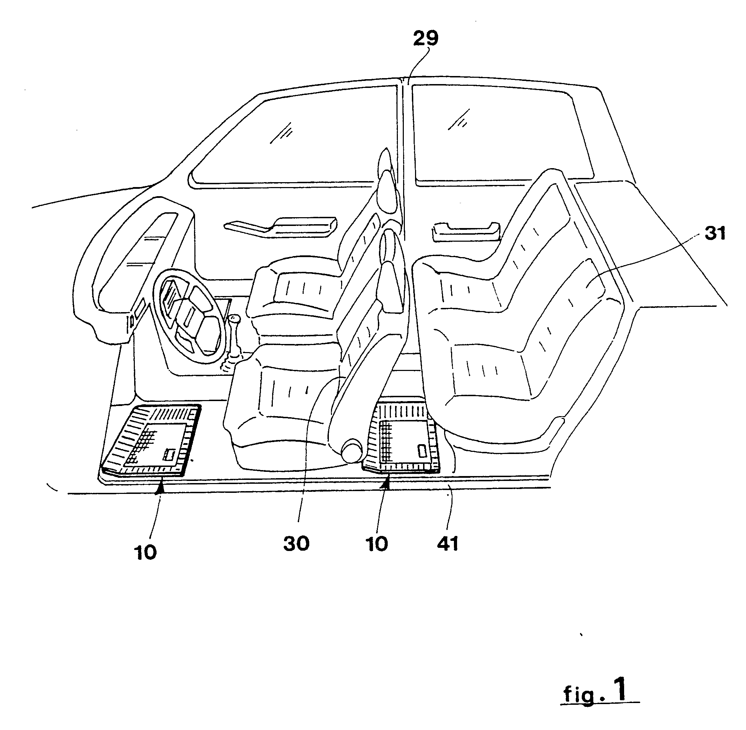

Fig. 1 shows mats 10 in position on the front and back floors, 30 and 31, of the motor vehicle 29.

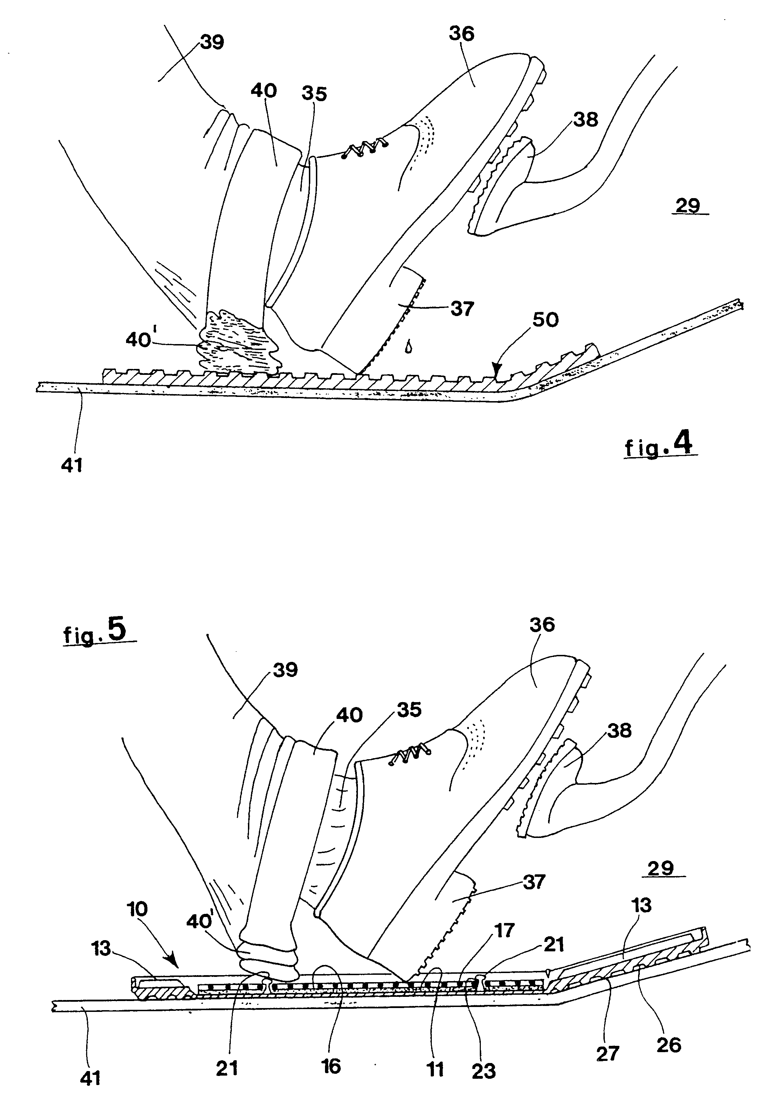

Fig. 4 illustrates the normal position of the driver's foot and trouser leg on the floor 41 of a motor vehicle 29. Through the shoe 36, the foot 35 presses the pedal 38 while the heel 37 rests on the type of mat 50 sold in the market. When the foot presses the pedal, resulting inclination of the leg causes the hem 40 of the trouser 39 to rest on said mat 50, a lump 40' of trouser material accumulating as seen in the figure.

Said lump of material absorbs the water carried inside the motor vehicle by the driver's shoes where it collects as a stagnant pool on the mat.

Figure 5 however shows how the grating 17 on the mat 10, subject of the invention, keeps the shoe 36, and therefore the trouser 39 and especially its hem area 40', perfectly dry since the water has been absorbed by the spongy layer 16. Deodorant put in through the aperture made for it is rapidly absorbed by the absorbent layer.

## Claims

1. Floor mat for motor vehicles characterized in that, in the position where the feet rest, it has a removeable grating (17) and other means suitable for keeping said zone substantially dry even if water is carried inside the vehicle from the outside on the driver's shoes (36).

2. Floor mat for motor vehicles as in claim 1, characterized in that the water collecting below the grating 17) runs down drainage channels into a posterior tray-like depression in said mat (10).

3. Floor mat for motor vehicles as in claim 1, characterized in that between the grating (17) and the bottom of the mat (10) there are one or more layers (16) of absorbent material.

4. Floor mat for motor vehicles as in claim 3, characterized in that the absorbent layers 16) are of spongy material.

5. Floor mat for motor vehicles as in claim 1, characterized in that the grating (17) is made of plastic material and is formed of crossed strips or consists of a perforated sheet.

6. Floor mat for motor vehicles as in claims 1 and 3, characterized in that a "package" (15), consisting of the grating (17) and absorbent layers (16), lies in a tray-like depression (11) in the floor mat (10), channels (24) being created in zone (12) of said mat (10) around the tray-like depression (11), for draining water into the absorbent layers (16).

7. Floor mat for motor vehicles as in claim 1,characterized in that the grating (17) is held to the mat (10) by frontally or laterally placed snap-fixing means, knobs (21) or the like, fixed to the mat (10), that when lightly pressed, enter holes (18) made for them in said grating, or by moveable means such as screws and the like, or by a side hinge or the like, said means being suitable for quick and easy removal of the grating (17) or for taking it off to facilitate cleaning.

8. Floor mat for motor vehicles, as in claims 1 and 3, characterized in that there is a zone in the grating (17) behind that on which the feet rest, there being in said zone a wide hole (25) through which a liquid, powder or paste deodorant can easily be put into the absorbent layers (16) to neutralize any unpleasant smells inside the vehicle and make it more comfortable.

9. Floor mat for motor vehicles, as in claims 1 and 3, characterized in that a box, communicating with the absorbent layers (16), is associated to the mat (10) for gradual transfer of deodorant from said box to said layers.

10. Floor mat for motor vehicles as in claim 6, characterized in that the tray-like depression (11) holding the "package" (15) is made downward from the upper plane of the mat (10) to a depth practically corresponding to the thickness of the "package" (15), the protrusion on the underside of the mat created by the tray (11) being evened up by ribbing (27),or protruding structures and the like, on the other zones (26) of said underside so that total thickness of the mat (10) is about the same all over.

fig.1

**fig.3**

**fig.2**

fig.4

fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 531 991 (RAIDA) <br> * Page 4, lines 5-24; figures * | 1,3,10 | B 60 N 3/04 |
| A | FR-A-2 617 102 (FRANCAISE) <br> * Page 2, lines 11-35; figures * | 1,2,6, 10 | |
| A | GB-A-2 171 901 (CANNON) <br> * Page 1, lines 62-130; figures * | 1,2,6, 10 | |
| A | CA-A-1 014 191 (FAGAN) <br> * Page 1, line 13 - page 2, line 8; figures * | 1-3,5 | |
| A | FR-A-2 381 152 (DESPRO) <br> * Page 2, line 6 - page 3, line 15; figures * | 1,3,8 | |

TECHNICAL FIELDS
SEARCHED (Int. Cl.5)

A 47 G
B 60 N

**The present search report has been drawn up for all claims**

| Place of search | Date of completion of the search | Examiner |
|---|---|---|
| THE HAGUE | 13-12-1989 | HORVATH R.C. |

EPO FORM 1503 03.82 (P0401)